# EUROPEAN PATENT SPECIFICATION

(11) **EP 2 440 494 B1**
(45) Date of publication and mention of the grant of the patent: **18.06.2014**
(21) Application number: 10708224.0
(22) Date of filing: 15.03.2010
(51) Int. Cl.: C02F 1/00

(54) **FILTERING SYSTEM**
FILTERSYSTEM
SYSTÈME DE FILTRATION

(30) Priority: 10.06.2009 IT PD20090171
(43) Date of publication of application: 18.04.2012
(73) Proprietor: Laica S.p.A., 36021 Barbarano Vicentino (IT)
(72) Inventor: MORETTO, Maurizio, I-36100 Vicenza (IT)
(74) Representative: Locas, Davide
(86) International application number: PCT/EP2010/053297
(87) International publication number: WO 2010/142473

(56) References cited:
- EP-A- 1 484 097
- WO-A-02/42218
- WO-A-2005/085139
- WO-A-2008/017182
- DE-A1- 10 143 884
- US-A1- 2005 229 699
- US-B1- 6 224 751

## Description

### Technical field

The invention relates to a percolation type filter system of the type having a replaceable filter cartridge, including the features set out in the preamble of the main claim.

Those filter systems are widely used in the treatment of water for domestic and alimentary use for the production of jugs, cafetières, tisanieres and electric kettles.

### Technological background

In such filter systems, and in particular in filter jug type systems, there is encountered the problem of indicating to the user the exhaustion conditions of the fitter cartridge and to provide a signal in accordance with those conditions, in particular when the exhaustion- condition of the cartridge is reached and it is therefore necessary to replace it.

There are known in the prior art various types of device which fulfil this function and are based on a display, in which the user can immediately read the effective exhaustion conditions of the cartridge and decide when to replace it, such as in the carafes disclosed in US 6,224,751 or EP 1 484 097.

The display usually comprises a bar type graphic representation which involves direct calculation and which increases for each group of filtering cycles carried out or for each filtering operation carried out, or a numerical representation of the number of filling cycles with a countdown type calculation, in which the maximum number of cycles possible is represented when the new cartridge is inserted and is subsequently gradually reduced as a result of each group of filtering cycles which are carried out.

The main disadvantage of that solution is the fact that it is not always immediately effective, both owing to inattention and owing to any visual handicaps of the user.

### Statement of invention

The technical problem addressed by the present invention is therefore to provide a filter system which is structurally and operationally configured to overcome all the disadvantages set out with reference to the prior art cited.

### Brief description of the drawings

The features and advantages of the invention will be better appreciated from the following detailed description of one preferred though non-exclusive embodiment which is illustrated by way of non-limiting example with reference to the appended drawings, in which:
- Figure 1 is a partially sectioned schematic view of a filter system according to the invention;
- Figure 2 is a schematic view, drawn to an enlarged scale, of a detail of the system of Figure 1.

### Preferred embodiment of the invention

With reference to the Figures, there is generally designated 1 a jug type filter system of the type having a replaceable cartridge for filtering water for domestic use.

The jug 1 comprises a mouth 1a which is closed by a removable cover 3. In another construction variant of the invention, the cover 3 can be hinged with respect to the jug 1 in order to open/close the mouth 1a. The jug 1 comprises a handle 20 and an opposing spout 21 for dispensing the filtered water.

There is provided on the handle 20 a contact sensor 20a for detecting a condition in which the handle 20 is grasped by the user. The jug 1 is provided internally with a funnel-like divider 4 which defines a first storage reservoir 5 for the water to be filtered communicating, via a pipe 7, with a second storage reservoir 6 for the filtered water.

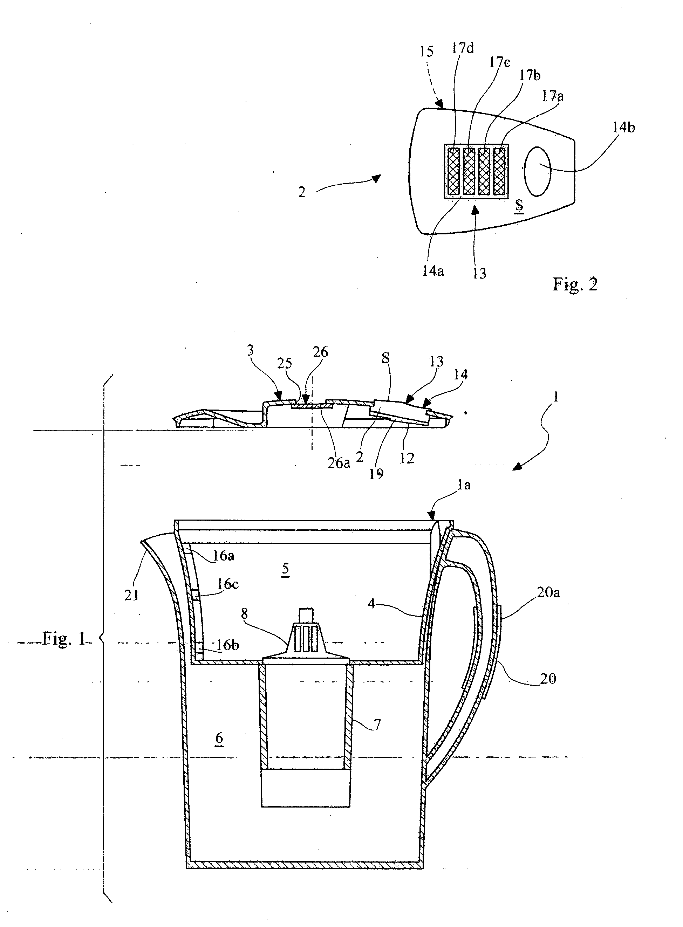

There are provided in the storage reservoir 5 a plurality of level sensors 16a - n (three sensors 16a, b, c in the example of Figure 1) which are arranged at the wall of the storage reservoir 5. The sensor 16a is positioned at a maximum filling level of the storage reservoir 5, the sensor 16b is positioned at the bottom level and the sensor 16c is positioned at an intermediate level.

A removable filter cartridge 8 is received in the pipe 7 in such a manner that the water which flows owing to gravitational force from the first reservoir 5 to the second reservoir 6 necessarily passes through the filter material contained in the cartridge 8.

The cartridge 8 must be replaced at the end of its effective service-life which is established in accordance with the volume of water filtered in total, the time elapsed from the first actuation thereof and/or other parameters, such as temperature and/or hardness of the water. To that end, the jug 1 comprises a calculation device 2 which is capable of calculating the effective and/or remaining service-life of the cartridge 8, and which is arranged on the cover 3 or, in another construction variant of the invention, on the upper portion of the handle 20. In order to measure the filtering cycles, the cover 3 comprises a through-hole 25 for introducing the water to be filtered, at which there is provided a closure device 26 which comprises a stopper 26a and a sensor which is capable of signalling the opening of the stopper itself. The opening of the stopper 26a may be carried out automatically by being actuated by the flow of water being introduced into the jug 1 through the opening 25, or manually by being actuated by the user.

The calculation device 2 comprises a casing 11 which is received in a seat 12, a display 13 which is positioned on a visible surface S thereof and which is capable of indicating the state of the remaining service-life of the cartridge 8 in order to bring about the replacement thereof when the state of efficiency thereof has reached such a threshold that adequate filtration is no longer-ensured.

The calculation device 2 further comprises an electronic calculation circuit 15 which is supplied with electrical power by battery and which is received inside the casing 11, which is provided so as to change the indication of the exhaustion state of the cartridge 8 communicated by the display 13. The electronic calculation circuit 15 is electrically connected to the closure device 26 so as to establish the remaining life of the cartridge in accordance with the number of cycles carried out from the last replacement of the cartridge 8 on the basis of a maximum number of cycles which is predetermined or calculated in accordance with a parameter of the water to be filtered, for example, the hardness.

The electronic calculation circuit 15 is further electrically connected to the display 13 in order to transmit a signal in proportion to the service-life and/or remaining life of the cartridge 8.

The display 13 is of the graphic type, with a foreground comprising a plurality of indicating symbols such as a plurality of bars 17a - n (four bars 17a - d in the example of the Figures). The display 13 can be of the type involving direct calculation (the graphic bar increases for each group of filtering cycles carried out or for each filtering operation carried out) and involving backward calculation (the graphic is represented in full upon introduction of the new cartridge 8 and is gradually deactivated as a result of each group of filtering cycles carried out).

In accordance with other construction variants, there are provided for the display 13 other graphic types, having foregrounds which are different from the one described above. For example, a pie type graphic representation, or numerical types, for example, a representation of percentage values referring to the original full value.

The user can read off the display 13 the effective exhaustion conditions of the cartridge 8 and decide to replace it in good time.

The calculation device 2 comprises a visual signalling device and an acoustic signalling device in order to visually and acoustically signal an alarm concerning the exhaustion of the cartridge 8.

The visual signalling device of the calculation device 2 includes a backlit screen 14a which acts as a background for the bars 17a - d of the display 13. The screen 14a is illuminated by means of a luminous source 19 which is positioned on the calculation device 2, at the opposite side with respect to the surface S.

In accordance with another construction variant, which does not fall within the scope of the claims, the visual signalling device includes the indicating symbols 17 a - d. In such a variant the luminous source 19 is operatively associated to the bars 17a - d, in such a way that the indicating symbols 17a - d are chromatically variable in accordance with the state of the remaining service-life of the cartridge (8).

In both case, the luminous source 19, of the LED type or another type, is chromatically variable, being able to change colour in accordance with the state of the remaining service-life of the cartridge 8. According to one example of an operating method, with the display 13 operating with direct calculation, the luminous source 19 is green when the bar type graphic representation comprises only the first bar 17a or the first two bars 17a, b, and is yellow when the bar type graphic representation comprises the first three bars 17a, b, c and is red when the bar type graphic representation comprises all the bars 17a - d. According to a construction variant, when the bar type graphic representation comprises all the bars 17a - d or when the exhaustion condition of the cartridge 8 is established, the luminous source 19 is actuated by the electronic calculation circuit 15 in a flashing manner. According to a construction variant of the invention, which does not fall within the scope of the claims, the visual signalling device comprises a chromatically variable luminous source, for example, of the LED type, operating in a manner similar to the luminous source 19 and positioned on the cover 3 in a position spaced apart from the display 13.

The acoustic signalling device of the calculation device 2 comprises a sound emitter 14b which is capable of emitting sounds which are variable in accordance with the state of exhaustion of the cartridge 8. For example, the sounds emitted by the emitter can be variable in terms of intensity and/or frequency. According to an example of an operating method, the sound emitter 14b emits sounds of increasing intensity as the remaining life of the cartridge decreases, reaching a maximum intensity when the cartridge has reached the exhausted condition and must therefore be replaced.

According to a construction variant of the invention, the calculation device 2 comprises only a visual signal. According to another construction variant of the invention, the electronic calculation circuit 15 is further electrically connected to the contact sensor 20a and to the level sensors 16a, b, c in such a manner that the visual signalling device and/or the acoustic signaling device of the calculation device 2 are enabled only after the sensor 20a detects a condition in which the handle 20 is grasped by the user, or when the level sensors 16a, b, c measure a level in the first reservoir 5 that is greater than a predetermined threshold.

According to another construction variant of the invention, the visual signal and/or the acoustic signal of the calculation device 2 can be used to signal an alarm relating to other parameters, in addition to the exhaustion condition of the cartridge, for example, parameters associated with the characteristics of the water, such as hardness, or the cartridge, such as the time elapsed since the last replacement.

The use of a visual signalling device and/or acoustic signalling device allows the user to be informed about the exhaustion condition of the cartridge, even without paying attention to the graphic display 13. The acoustic signalling device allows that condition to be able to be signalled even to a user with a visual handicap.

The invention is preferably used in filter jugs of the replaceable cartridge type and in particular in filter jugs for purifying water for domestic use. The calculation device 2 according to the invention can also be used in various filter systems, such as kettles, cafetières, in-line filters and the like. The invention thereby achieves the objects set out in a simple and effective manner, allowing optimal use of the filter cartridges so that it is always possible to avoid the use of the cartridges after the exhausted state has been reached, whilst fully complying with the parameters relating to user health and safety.

## Claims

1. A percolation type filter system (1) comprising:
- a first reservoir (5) and a second reservoir (6) for storing water to be filtered and for storing filtered water, respectively,
- a pipe (7) for communication between the reservoirs,
- a removable filter cartridge (8) which is received in the pipe (7),
- a calculation device (2) which is able to calculate the effective and/or remaining service-life of the cartridge (8) in accordance with one or more significant parameters of the water, selected from the volume of water filtered, the hardness of the water to be filtered and other parameters, the calculation device (2) comprising a display (13) which is positioned on a visible surface (S) of a casing (11) of the calculation device (2) and which is capable of indicating the state of the remaining service-life of the cartridge (8), and
- a visual signalling device (14a) in order to signal an alarm indicating the cartridge (8) is exhausted, wherein
- the display (13) has a foreground comprising indicating symbols (17a,b,c,d), **characterised in that** the visual signalling device (14a) includes
- a backlit screen which acts as a background for the display (13), and at least one luminous source (19), positioned at opposite side with respect to the surface (S), and illuminating the screen (14), which is chromatically variable in accordance with the state of the remaining service-life of the cartridge (8) so that said backlit screen is chromatically variable in accordance with the state of the remaining service-life of the cartridge (8).

2. A filter system (1) according to claim 1, wherein the calculation device (2) comprises an electronic calculation circuit (15) for actuating the luminous source (19) in a flashing manner when the calculation device (2) establishes that the cartridge (8) is in an exhausted condition.

3. A filter system (1) according to claim 1, further comprising an acoustic signalling device (14b) in order to signal an alarm indicating the cartridge (8) is exhausted, the acoustic signalling device (14b) being actuated by the calculation device (2) in order to emit sounds which are variable in accordance with the state of exhaustion of the cartridge (8).

4. A filter system (1) according to claim 3, wherein the acoustic signalling device (14b) is able to emit sounds which are variable in terms of intensity and/or frequency.

5. A filter system (1) according to one or more of the preceding claims, wherein the filter system (1) comprises a jug having a handle (20), on which there is provided a contact sensor (20a) in order to detect a condition in which the handle (20) is grasped, the visual signalling device (14a) being enabled as a result of the detection of the condition in which the handle (20) is grasped.

6. A filter system (1) according to one or more of the preceding claims, wherein the filter system (1) comprises a plurality of level sensors in at least one of the reservoirs (5, 6), the visual signalling device (14a) being enabled when the plurality of level sensors measure a level greater than a predetermined threshold in the at least one of the reservoirs (5, 6).

## Patentansprüche

1. Perkolationsfiltersystem (1), umfassend:
- einen ersten Behälter (5) und einen zweiten Behälter (6) zum Speichern von zu filterndem Wasser bzw. zum Speichern von gefiltertem Wasser,
- ein Rohr (7) zur Verbindung zwischen den Behältern,
- eine abnehmbare Filterpatrone (8), die im Rohr (7) aufgenommen ist,
- eine Berechnungsvorrichtung (2), die das Berechnen der effektiven und/oder Restnutzungsdauer der Patrone (8) gemäß einem oder mehrerer signifikanter Parameter des Wassers ermöglicht, die aus dem Volumen des gefilterten Wassers, der Härte des zu filternden Wassers und weiteren Parametern ausgewählt sind, wobei die Berechnungsvorrichtung (2) ein Display (13) aufweist, das auf einer sichtbaren Oberfläche (S) eines Gehäuses (11) der Berechnungsvorrichtung (2) positioniert ist und das Anzeigen des Status der Restnutzungsdauer der Patrone (8) ermöglicht, und
- eine optische Signalvorrichtung (14a) zum Signalisieren eines Alarms, der anzeigt, dass die Patrone (8) erschöpft ist, wobei
- das Display (13) einen Vordergrund mit Anzeigesymbolen (17a, b, c, d) aufweist, **dadurch gekennzeichnet, dass** die optische Signalvorrichtung (14a) umfasst:
- einen hintergrundbeleuchteten Bildschirm, der als Hintergrund für das Display (13) dient, und zumindest eine Leuchtquelle (19), die in Bezug auf die Oberfläche (S) auf der gegenüberliegenden Seite positioniert ist, und den Bildschirm (14) beleuchtet, der gemäß dem Status der Restnutzungsdauer der Patrone (8), chromatisch veränderbar ist, so dass der hintergrundbeleuchtete Bildschirm gemäß dem Zustand der Restnutzungsdauer der Patrone (8), chromatisch veränderbar ist.

2. Filtersystem (1) nach Anspruch 1, wobei die Berechnungsvorrichtung (2) eine elektronische Berechnungsschaltung (15) zum blinkenden Betätigen der Leuchtquelle (19) aufweist, wenn die Berechnungsvorrichtung (2) feststellt, dass sich die Patrone (8) in einem erschöpften Zustand befindet.

3. Filtersystem (1) nach Anspruch 1, ferner umfassend eine akustische Signalvorrichtung (14b) zum Signalisieren eines Alarms, der anzeigt, dass die Patrone (8) erschöpft ist, wobei die akustische Signalvorrichtung (14b) durch die Berechnungsvorrichtung (2) betätigt wird, um Klänge auszugeben, die gemäß dem Status der Erschöpfung der Patrone (8) veränderbar sind.

4. Filtersystem (1) nach Anspruch 3, wobei die akustische Signalvorrichtung (14b) die Ausgabe von Klängen ermöglicht, die hinsichtlich einer Intensität und/oder Frequenz veränderbar sind.

5. Filtersystem (1) nach einem oder mehreren der vorhergehenden Ansprüche, wobei das Filtersystem (1) einen Krug mit einem Handgriff (20) aufweist, auf dem ein Kontaktsensor (20a) vorgesehen ist, um einen Zustand zu erfassen, bei dem der Handgriff (20) gegriffen wird, wobei die optische Signalvorrichtung als Ergebnis der Erfassung des Zustandes aktiviert wird, bei dem der Handgriff (20) gegriffen wurde.

6. Filtersystem (1) nach einem oder mehreren der vorhergehenden Ansprüche, wobei das Filtersystem (1) eine Mehrzahl von Niveausensoren in zumindest einem der Behälter (5, 6) aufweist, wobei die optische Signalvorrichtung (14a) aktiviert wird, wenn die Mehrzahl der Niveausensoren ein Niveau in zumindest einem der Behälter (5, 6) messen, das größer als ein vorgegebener Grenzwert ist.

## Revendications

1. Système de filtre du type à percolation (1) comprenant :
un premier réservoir (5) et un second réservoir (6) pour stocker de l'eau destinée à être filtrée et pour stocker de l'eau filtrée, respectivement,
un tuyau (7) pour communication entre les réservoirs,
un cartouche (8) de filtre amovible qui est reçue dans le tuyau (7),
un dispositif de calcul (2) qui peut calculer la durée de vie efficace et/ou restante de la cartouche (8) selon un ou plusieurs paramètres significatifs de l'eau, sélectionnés parmi le volume d'eau filtrée, la dureté de l'eau à filtrer et d'autres paramètres, le dispositif de calcul (2) comprenant un affichage (13) qui est positionné sur une surface (S) visible d'un boîtier (11) du dispositif de calcul (2) et qui est capable d'indiquer l'état de la durée de vie restante de la cartouche (8), et
un dispositif de signalisation visuelle (14a) afin de signaler une alarme indiquant que la cartouche (8) est épuisée, dans lequel
l'affichage (13) comporte un avant-plan comprenant des symboles indicatifs (17a, b, c, d), **caractérisé en ce que** le dispositif de signalisation visuelle (14a) inclut
un écran rétro-éclairé qui agit comme un arrière-plan pour l'affichage (13), et au moins une source lumineuse (19), positionnée d'un côté opposé par rapport à la surface (S), et illuminant l'écran (14), qui varie chromatiquement selon l'état de la durée de vie restante de la cartouche (8) de telle manière que ledit écran rétro-éclairé varie chromatiquement selon l'état de la durée de vie restante de la cartouche (8).

2. Système de filtre (1) selon la revendication 1, dans lequel le dispositif de calcul (2) comprend un circuit de calcul électronique (15) pour actionner la source lumineuse (19) par flashs quand le dispositif de calcul (2) établit que la cartouche (8) est dans un état épuisé.

3. Système de filtre (1) selon la revendication 1, comprenant en outre un dispositif de signalisation acoustique (14b) afin d'envoyer un signal d'alarme indiquant que la cartouche (8) est épuisée, le dispositif de signalisation acoustique (14b) étant déclenché par le dispositif de calcul (2) afin d'émettre des sons qui sont variables selon l'état d'épuisement de la cartouche (8).

4. Système de filtre (1) selon la revendication 3, dans lequel le dispositif de signalisation acoustique (14b) peut émettre des sons qui sont variables en termes d'intensité et/ou de fréquence.

5. Système de filtre (1) selon une ou plus des revendications précédentes, dans lequel le système de filtre (1) comprend une carafe comportant une poignée (20), sur laquelle est placée un capteur de contact (20a) afin de détecter un état dans lequel la poignée (20) est saisie, le dispositif de signalisation visuelle (14a) étant déclenché comme un résultat de l'état dans lequel la poignée (20) est saisie.

6. Système de filtre (1) selon une ou plus des revendications précédentes, dans lequel le système de filtre (1) comprend une pluralité de capteurs de niveau dans au moins un des réservoirs (5, 6), le dispositif de signalisation visuelle (14a) étant déclenché quand la pluralité de capteurs de niveau mesure un niveau supérieur à un seuil prédéterminé dans l'au moins un des réservoirs (5, 6).
